Europäisches Patentamt

(19) European Patent Office

Office européen des brevets

(11) Publication number: **0 154 321**
**B1**

(12)                    EUROPEAN PATENT SPECIFICATION

(45) Date of publication of patent specification: **05.07.89**

(21) Application number: **85102424.0**

(22) Date of filing: **04.03.85**

(51) Int. Cl.⁴: **B 29 C 67/14,** B 29 C 63/24, B 65 H 51/18

(54) Strand laying apparatus and machine.

(30) Priority: **05.03.84 US 586419**

(43) Date of publication of application:
**11.09.85 Bulletin 85/37**

(45) Publication of the grant of the patent:
**05.07.89 Bulletin 89/27**

(84) Designated Contracting States:
**AT BE CH DE FR GB IT LI LU NL SE**

(56) References cited:
**WO-A-83/04217**
**WO-A-84/00351**
**US-A-3 810 805**

(73) Proprietor: **Cincinnati Milacron Inc.**
**(a Delaware Corporation), 4701 Marburg Avenue**
**Cincinnati, Ohio 45209 (US)**

(72) Inventor: **Pugh, John Howard**
**566 Sonny Lane, Mt. Carmel**
**Ohio 45244 (US)**

(74) Representative: **Lally, William et al**
**FORRESTER & BOEHMERT Widenmayerstrasse**
**4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a strand laying apparatus according to the preamble of claim 1 and generally to automatic machines for dispensing and laying strands of composite material onto a surface to fabricate structures.

Present date technology machines have been developed to arrange and compact strands or tows or composite material; for example, untwisted carbon fibers impregnated with epoxy or thermoplastic resin. Machines of this type are known as AVSD (Advances Variable Strand Dispensing) machines, wherein the tows are carried on storage creels, and are routed in parallel fashion at predetermined spaced intervals, beneath a compacting roller which compresses the strands against a surface, thus flattening and causing the strands to be contiguous in nature to create a part structure. Subsequent processing steps on such structures may employ a compression mould to further shape and compact the structure and, in the case of thermosetting, a curing operation may be performed, utilising vacuum bags in autoclaves for receiving the mounted part.

A conventional strand having apparatus, for example of the kind disclosed in WO 84/00351 and which forms the preamble of claim 1, comprises a head frame movable with respect to a work surface, a guide member mounted on said frame for controlling the spacing of a plurality of composite strands, and a compacting member mounted on said frame and which is movable with respect to said head frame to press said strands against said surface.

Such prior art assemblies have difficulty in handling cut strands, because the strands tend to get away and must be re-threaded for the next pass or lay down of material. Further, as additional plys of material are built up, the built up structure becomes somewhat compliant to the compacting roller which must compress the next lay of strands down against the built-up structure.

According to this invention there is provided a strand laying apparatus comprising a head frame movable with respect to a work surface, a guide member mounted on said frame for controlling the spacing of a plurality of composite strands, a compacting member mounted on said frame and which is movable with respect to said head frame to press said strands against said surface, characterised, firstly by the provision of a precompaction member mounted on said frame following said guide member and which is movable with respect to said head frame to press said strands against said surface, and secondly by the provision between the precompaction and compaction members of an additional functional device which is afforded either by a heating device or a clamping and severing device operative to sever the strands of the composite material.

Where the additional functional device comprises a clamping and severing device, preferably a clamping device of which is operative on movement of the guide member away from the work surface to clamp the strands downstream of the precompaction member. Advantageously the clamping and severing device also comprises a severing device adjacent to the clamping device downstream thereof, and which is operative to sever strands clamped by the clamping device.

Where the additional functional device comprises a heat source, preferably this is operative to apply heat to the strands upstream of the compaction member.

Preferably the strand laying apparatus comprises both the clamping and severing device and the heat source, preferably the heat source being operative to apply heat to the strands downstream of the clamping and severing devices.

Advantageously the guide member and the precompaction member are mounted for movement towards and away from the work surface in unison, and preferably the apparatus comprises an additional heat source located upstream of said precompaction member, and which is operative to heat not only the strands prior to being pressed against the surface by the precompaction member, but also to heat the surface against which the strands are pressed.

Advantageously both the guide member and the precompaction member may be in the form of rollers, and the precompaction member may be in the form of a roller for shoe.

In the accompanying drawings:

Figure 1 is an isometric view of a typical strand laying machine comprising a strand laying apparatus mounted on a movable slide way system;

Figure 2 is a diagrammatic view of a prior art strand laying apparatus;

Figure 3 is an elevational view taken in the direction of arrow 3 of Figure 2;

Figure 4 is a diagrammatic view of a strand laying apparatus which is the first embodiment of this invention;

Figure 5 is an elevational view taken in the direction of arrow 5 of Figure 4;

Figure 6 is a diagrammatic view similar to Figure 4 of a strand laying apparatus which is the second embodiment of this invention;

Figures 7(a) through 7(d) are diagrammatic views of a strand laying apparatus which is the third embodiment of this invention;

Figures 8(a) through 8(d) are diagrammatic views showing clamping and cutting sections of the strand laying apparatus of Figures 7(a) through 7(d);

Figure 9 is a section through the cutting blades of Figures 8(a) through 8(d);

Figure 10 is an exploded view of the cutting blades of Figure 9.

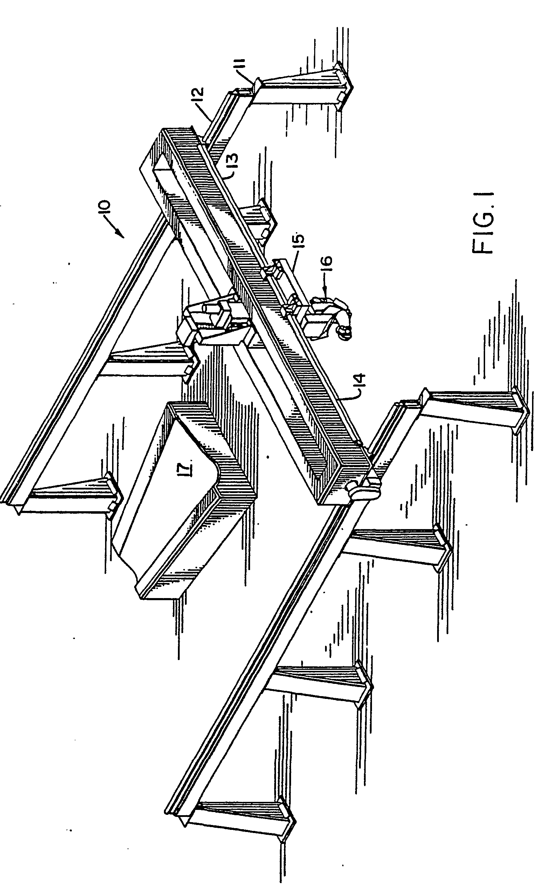

Figure 1 illustrates a basic strand laying machine 10 which might embody the present invention, wherein the machine 10 has a base structure 11 with an elevated sideway 12 for supporting an overhead bridge type support, or bifurcated gantry 13. The gantry 13 has a coordinate way system 14, for supporting a saddle 15 which may carry a variety of composite material workheads, such as the strand laying apparatus 16 shown. The apparatus 16 lays material on a surface for building up composite structures, such as the mould surface 17 shown in Figure 1.

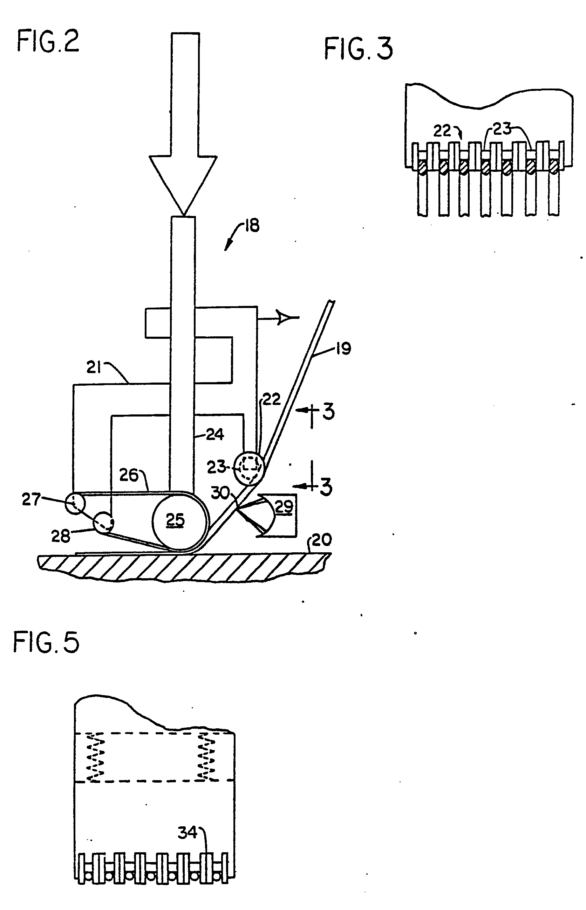

Figure 2 illustrates a prior art laying apparatus 18 for dispensing and laying strands 19 of composite material onto a support surface 20. The structure is shown in diagrammatic form for ease of understanding, but it will be appreciated by those of ordinary skill in the art, that the details of roller support bearings, slide bearings, and the like, are well within the capabilities of a component machine designer. In Figures 2 and 3 the apparatus 18 is carried by the machine saddle 15 of Figure 1 and consists, in part, of a main support frame 21 which carries a rotatable roller assembly 22 having grooves 23 therein for accomplishing a predetermined spacing of composite strands 19 which are received from a creel storage system (not shown). The frame 21 also has a vertically movable support rod 24, which is journalled for relative sliding with the frame 21, and the rod 24 carries a compacting roller 25 at its lowermost end, for impressing a compressive force on strands which are deposited on the part surface 20. In the assembly shown, a release paper 26 is trained from a dispensing reel 27 and around the compacting roller and onto a take-up reel 28 so that the strands 10 will not stick to the compacting roller 25. A heat source 29, such as an infrared lamp, is shown mounted on the support frame 21 and directs its heat onto the strands 19 at a point 30 between the spacing roller assembly 22 and the compacting roller 25, so that softening and compacting of the material is facilitated. At predetermined intervals, the compacting roller 25 may be lifted off the part surface 20 by withdrawing the support rod upward. The structure shown in Figure 1 does not illustrate a cutting assembly, but prior art assemblies, in general tend to utilise a mechanism (not shown) which will cut the strands 19 "up stream" i.e. at a point above spacing roller assembly 22. Figure 3 illustrates the grooved spacing roller assembly 22 which serves to space the strands or tows of composite material.

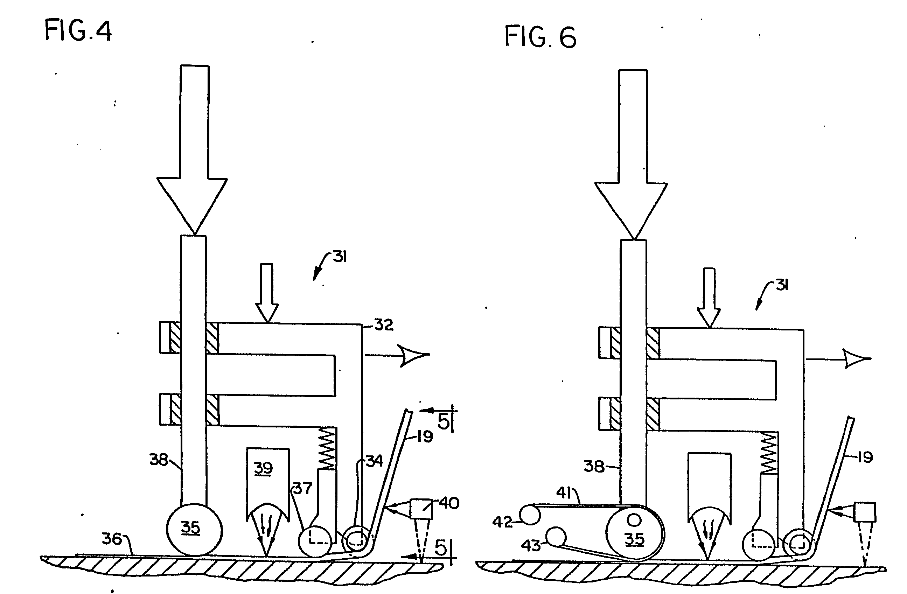

Figure 4 illustrate a strand laying apparatus which is the first embodiment of this invention wherein the frame 32 of the head 31 is relatively movable in a vertical direction, i.e. by a pneumatic cylinder 33 for example, relative to the support saddle 15, and the base frame 32 carries a spacing or guide member in the form of a roller 34 at its lowermost end leading a compacting member in the form of a roller 35. The placement of the spacing roller 34 near the part surface 36, and in front of the trailing compacting roller 35 serves to ensure better spacing of the material on the part surface 36. A precompaction member in the form of a roller 37 is carried on the frame 32, at a point immediately following the spacing roller 34, so that precompaction in compression of the composite strands 19 is accomplished before the trailing compacting roller 35 performs the final compaction. The compacting roller 35 is carried on a vertical support rod 38 which is independently loaded against the composite surface 36. The base frame 32 carries a pair of heat sources 39 and 40, the heat sources 39 being located between the precompaction roller 37 and the trailing compacting roller 35, to soften the material for the final compaction, and the heat source 40 being employed as a preheater in front of the spacing roller 34, to warm the strands 19 before passing under the precompaction roller 37. The preheater 40 may be optionally employed to warm the part surface 36 as well, and the direction of heat on the surface 36 is indicated by a dotted line. Figure 5 illustrates the spacing roller 34 located next to the part surface 36.

Figure 6 illustrates a strand laying apparatus which is the second embodiment of this invention, wherein the compacting roller 35 is optionally pinned to the vertical support rod 38, to prevent its rotation. In such manner, the roller 35 now acts as a shoe or skid, and release paper 41 is trained around the skid diameter from a paper dispensing reel 42 to a paper take-up reel 43. Good results have been seen in the laboratory from use of a roller as a skid for compacting the composite strands 19.

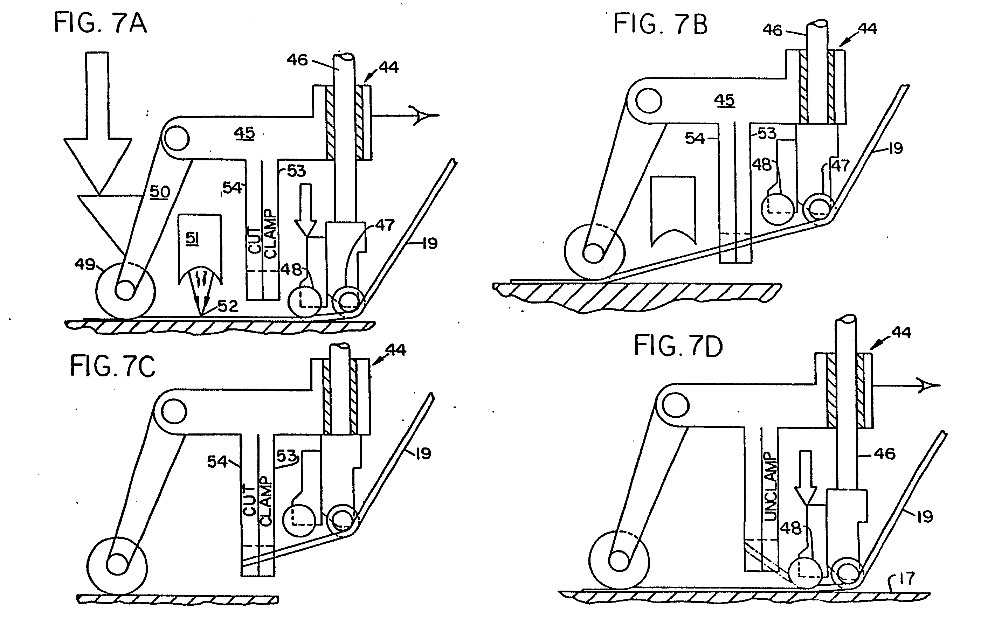

Figures 7(a) through 7(d) illustrate the sequences of a strand laying apparatus which is the third embodiment having precompaction capabilities. The structure shown in Figure 7(a) comprises a head 44 comprising a head frame 45 which is carried by the machine saddle 15 (not shown). The head frame 45 carries a vertical roller support rod 46 which is movable during the vertical axis, and the rod 46 has a spacing member (roller 47) located at its lowermost end. A precompaction member (roller 48) is carried just behind the spacing roller 47. The frame 46 has a pivotable trailing compaction member (roller 49) carried on a swinging arm 50, which is preloaded at selected intervals down against the composite strands 19. The frame 45 carries a heater 51, such as the quartz lamp shown, at a point 52 between the precompaction roller 48 and the compaction roller 49. The frame 45 has a clamping device 53 and a cutting device 54 which are fixed with respect to the frame 42 at a point above the composite material, between the compaction and precompaction rollers 49, 48 and before the heater 51. Figure 7(b) shows the assembly with the precompaction roller 48 and spacing roller 47 raised, which causes the strand 19 to be pulled upward and be trapped in the clamping device 53. Figure 7(c) illustrates that the cutting device 54 has already cut the strand 19 and that the strand 19 is still firmly clamped in the clamping device 53. Figure 7(d) shows the head 44 when it is desired to restart laying strands 19 on the part surface or mould surface 17. At such time, the vertical support rod 46 is lowered, driving the strands 19 and precompaction roller 48 down against the working surface 17. At such time, the clamping section 53 is powered to an unclamped position, releasing the strand 19 for continued movement of the strand dispensing head 44.

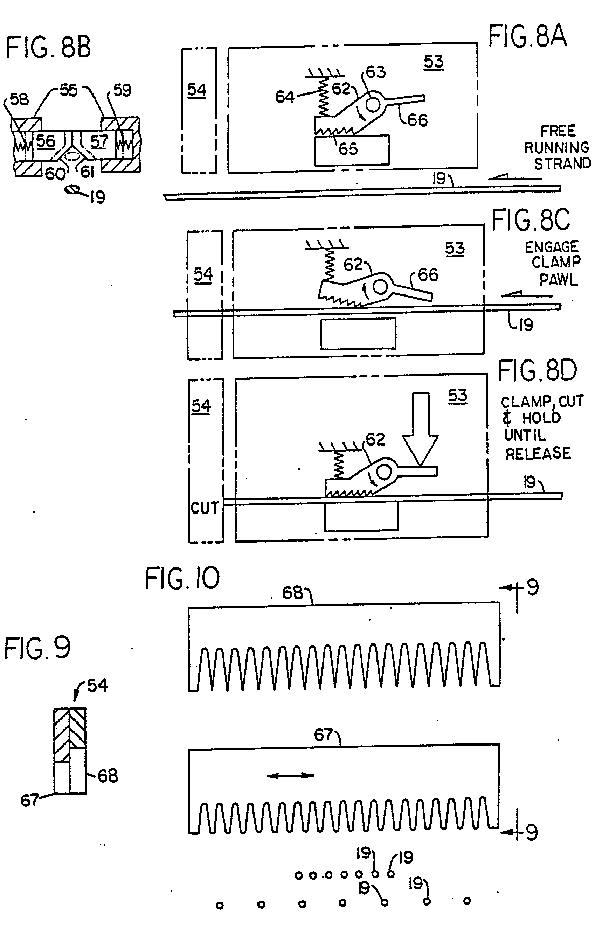

Figures 8(a) through 8(d) illustrates details of the clamping device 53 of Figure 7(a), as having a

housing portion 55 which supports a pair of slidable blocks 56, 57 mounted in opposition to one another and biased by springs 58, 59 and, as can be seen in Figure 8(b), the blocks 56, 57 each have a bevelled portion 60, 61 where they join so that the composite strands 19, when pulled upward towards the blocks 56, 57 will be forced into the V formed by the bevelled portions 60, 61 and will be pulled upward overcoming the biasing springs 58, 59 and driving the blocks 56, 57 back until the strand position of Figures 8(c) is reached. At such position, the blocks come together again and prevent the downward movement of the strand 19. The clamping device 53 has a pawl 62, which is pivotably supported on a pivot pin 63 and biased by a spring 64 toward the entry position of the relatively moving strand 19. The lower face of the pawl is provided with fine teeth 65, and is biased downward, against the blocks 56, 57. Thus when the strand 19 is pulled upward as in Figure 8(c), parting the blocks 56, 57 and pawl 62 is driven upward, yet remains biased downward against the strand surface. In such fashion, the friction engagement of the pawl teeth 65 against the strand surface will prevent reverse movement of the strand 19, since any backward movement will cause a rotational movement on the pivot pin 63, assisting the biasing spring 64 in driving the pawl 62 tighter into engagement with the strand surface. A counter moment arm 66 extends rearwardly from the pawl 62, so that an actuating force, such as that which might be supplied by a solenoid plunger and indicated by the broad arrow in Figure 8(d), can selectively be applied to torque the pawl 62 thus overcoming the biasing spring 64 and releasing the grip of the pawl 62 against the strand 19. The cutting device 54 is located to the left of the clamping section 53 in the figures, and the cut strand 19 as shown in Figures 8(d) will be prevented from back-pulling and leaving the clamping device 53. It has been determined in tests that the tensile strength of a strand 19 can be as high as 500 pounds. When it is desired to commence strand laying again the precompaction roller 48 is impressed against the strands 19 as shown in Fgiure 7(d), and the pawl 62 is released as shown by the application of counter moment force in Figure 8(d).

Figure 9 is a side elevational section through the cutting device 54, showing that the cutter blades 67, 68 are adjacent to one another and mounted in a slidable fashion in a cutter support housing (not shown). The exploded view of Figure 10, shows that the cutter blades 67, 68 are comb-like, one being stationary and the other being movable with respect to the stationary one in a typical manner found with certain reciprocating shears. The strands 19 are shown in alternate spacings, both wide and narrow, to shown that as the strands 19 are lifted towards the cutting device 54, the comb teeth will tend to entrap both single and/or multiple strands 19 to accomplish the cut.

## Claims

1. A strand laying apparatus comprising a head frame (32, 45) movable with respect to a work surface (17), a guide member (34, 47) mounted on said frame for controlling the spacing of a plurality of composite strands (19), a compacting member (35, 49) mounted on said frame and which is movable with respect to said head frame to press said strands (19) against said surface (17), characterised, firstly by the provision of a precompaction member (37, 48) mounted on said frame following said guide member and which is movable with respect to said head frame to press said strands against said surface, and secondly by the provision between the precompaction and compaction members of an additional functional device which is afforded either by a heating device (39, 51) or a clamping and severing device (53, 54) operative to sever the strands of the composite material.

2. Apparatus according to Claim 1 wherein the guide member (34, 47) and the precompaction member (37, 48) are mounted for movement towards and away from the work surface (17) in unison.

3. Apparatus according to one of Claims 1 and 2 comprising a heat source (40) located upstream of said precompaction member (37).

4. Apparatus according to Claim 3 wherein said heat source (40) is operative to heat not only the strands (19) prior to being pressed against surface (17) by the precompaction member (37), but also to heat the surface (17) against which said strands are pressed.

5. Apparatus according to any one of the preceding claims wherein the additional functional device comprises a clamping and severing device (53, 54), a clamping (53) device of which is operative on movement of the guide member (47) away from the work surface (17) to clamp the strands (19) downstream of the precompaction member (48).

6. Apparatus according to Claim 5 wherein the clamping and severing device comprises a severing device (54) adjacent to the clamping device (53) downstream thereof and which is operative to sever strands clamped by the clamping device.

7. Apparatus according to any one of the preceding claims wherein the guide member (34, 47) is in the form of a roller, the precompaction member (37, 48) is in the form of a roller, and the compaction member (35, 49) is in the form of a roller or a shoe.

8. Apparatus according to any one of the preceding claims wherein the additional functional device comprises a heat source (39, 51) which is operative to apply heat to the strands upstream of the compaction member.

9. Apparatus according to Claim 8 as appendant to Claim 5 or Claim 6 wherein the heat source (51) is operative to apply heat to the strands downstream of the clamping and severing devices (53, 54).

10. A strand laying machine for laying strands of composite material and comprising a machine base (11), a head carrier (13) movable on a base way system (12), a strand dispensing source, and a strand laying apparatus mounted on the head carrier (13) and which is adapted to apply strands of said composite material to a mould surface (17), the apparatus being in accordance with any one of the perceding claims.

## Patentansprüche

1. Apparat zum Auslegen von Strängen, der einen Kopfrahmen (32, 45), der bezüglich einer Arbeitsfläche (17) bewegbar ist, ein Führungsteil (34, 47), das auf besagtem Rahmen angebracht ist, um den Abstand zwischen mehreren Verbundstoff-Strängen (19) zu steuern und ein Verdichtungsteil (35, 49) umfaßt, das auf besagtem Rahmen angebracht ist und das bezüglich besagten Kopfrahmens bewegbar ist, um besagte Stränge (19) gegen besagte Fläche (17) zu drücken, gekennzeichnet durch erstens das Vorsehen eines Vorverdichtungsteils (37, 48), das auf besagtem Rahmen im Anschluß an besagtes Führungsteil angebracht ist und das bezüglich besagten Kopfrahmens bewegbar ist, um besagte Stränge gegen besagte Fläche zu drücken, und zweitens durch das Vorsehen einer zusätzlichen Funktionseinheit zwischen den Vorverdichtungs- und Verdichtungsteilen, die entweder von einer Heizeinrichtung (39, 51) oder einer Klemm- und Abtrenneinrichtung (53, 54), die betrieben werden kann, um die Stränge des Verbundwerkstoffs abzutrennen, gebildet ist.

2. Apparat nach Anspruch 1, dadurch gekennzeichnet, daß das Führungsteil (34, 47) und das Vorverdichtungsteil (37, 48) so angebracht sind, daß sie sich zusammen auf die Arbeitsfläche (17) zu und davon weg bewegen.

3. Apparat nach einem der Ansprüche 1 und 2, gekennzeichnet durch eine Heizquelle (40), die oberhalb besagten Vorverdichtungsteils (37) angeordnet ist.

4. Apparat nach Anspruch 3, dadurch gekennzeichnet, daß besagte Heizquelle (40) betrieben wird, um nicht nur die Stränge (19), bevor diese vom Vorverdichtungsteil (37) gegen die Fläche (17) gedrückt werden, zu erhitzen, sondern auch um die Fläche (17), gegen die besagte Stränge gedrückt werden, zu erhitzen.

5. Apparat nach einem der vorangehenden Ansprüche, dadurch gekennzeichnet, daß die zusätzliche Funktionseinheit eine Klemm- und Abtrenneinrichtung (53, 54) umfaßt, von der eine Klemm (53) einrichtung bei Bewegung des Führungsteils (47) von der Arbeitsfläche (17) weg betrieben wird, um die Stränge (19) unterhalb des Vorverdichtungsteils (48) festzuklemmen.

6. Apparat nach Anspruch 5, dadurch gekennzeichnet, daß die Klemm- und Abtrenneinrichtung neben der Klemmeinrichtung (53) unterhalb davon eine Abtrenneinrichtung (54) umfaßt, die betrieben wird, um die von der Klemmeinrichtung festgeklemmten Stränge abzutrennen.

7. Apparat nach einem der vorangehenden Ansprüche, dadurch gekennzeichnet, daß das Führungsteil (34, 47) in der Form einer Walze ist, das Vorverdichtungsteil (37, 48) in der Form einer Walze ist und das Verdichtungsteil (35, 49) in der Form einer Walze oder eines Schuhes ist.

8. Apparat nach einem der vorangehenden Ansprüche, dadurch gekennzeichnet, daß die zusätzliche Funktionseinheit eine Heizquelle (39, 51) umfaßt, die betrieben wird, um die Stränge oberhalb des Verdichtungsteils mit Wärme zu beaufschlagen.

9. Apparat nach Anspruch 8, wenn rückbezogen auf Anspruch 5 oder Anspruch 6, dadurch gekennzeichnet, daß die Heizquelle (51) betrieben wird, um die Stränge unterhalb der Klemm- und Abtrenneinrichtungen (53, 54) mit Wärme zu beaufschlagen.

10. Maschine zum Auslegen von Strängen aus Verbundwerkstoff, die eine Maschinenbasis (11), einen Kopfträger (13), der auf einem Basis-Wegsystem (12) bewegbar ist, eine Strangabgabequelle und einen Apparat zum Auslegen von Strängen umfaßt, der auf dem Kopfträger (13) angebracht ist und ausgelegt ist, um Stränge aus besagtem Verbundwerkstoff auf eine Formoberfläche (17) aufzubringen, wobei der Apparat gemäß einem der vorangehenden Ansprüche ausgebildet ist.

## Revendications

1. Appareil pour étendre des cordes ou torons comprenant un châssis de tête (32, 45) mobile par rapport à une surface de travail (17), un élément de guidage (34, 47) monté sur le châssis pour commander l'espacement de plusieurs torons en matière composite (19), un élément de compactage (35, 49) monté sur le châssis et qui est mobile par rapport au châssis de tête pour comprimer les torons (19) contre la surface (17), caractérisé premièrement par le fait de prévoir un élément de précompactage (37, 48) monté sur le châssis suivant cet élément de guidage et qui est mobile par rapport au châssis de tête pour comprimer les torons contre cette surface et deuxièmement, par le fait de prévoir entre les éléments de précompactage et de compactage un dispositif functionnel supplémentaire qui est soit un élément de chauffage (39, 51) soit un dispositif de bridage et de sectionnement (53, 54) apte à sectionner les torons du matériau composite.

2. Appareil selon la revendication 1, dans lequel l'élément de guidage (37, 47) et l'élément de précompactage (37, 48) sont montés pour le mouvement en direction de et en éloignement de la surface de travail (17) de façon harmonisée.

3. Appareil selon l'une quelconque des revendications 1 et 2 comprenant une source de chaleur (40) située en amont de l'élément de précompactage (37).

4. Appareil selon la revendication 3, dans lequel la source de chaleur (40) est apte à chauffer non seulement les torons (19) avant leur compression contre la surface (17) par l'élément de précompactage (37), mais également pour chauffer la surface (17) contre laquelle les torons sont comprimés.

5. Appareil selon l'une quelconque des revendications précédentes, dans lequel le dispositif fonctionnel supplémentaire compernd un dispositif de bridage et de sectionnement (53, 54), dispositif (53) qui réagit au mouvement de l'élément de guidage (47) en éloignement de la surface de travail (17) pour brider les torons (19) en aval de l'élément de précompactage (48).

6. Appareil selon la revendication 5, dans lequel le dispositif de bridage et de sectionnement comprend un élément de sectionnement (54) contigu au dispositif de bridage (53) en aval de celui-ci et qui est apte à sectionner les torons bridés par le dispositif de bridage.

7. Appareil selon l'une quelconque des revendications précédentes, dans lequel l'élément de guidage (34, 47) est sous la forme d'un rouleau, l'élément de précompactage (37, 48) est sous la forme d'un rouleau, et l'élément de compactage (35, 49) est sous la forme d'un rouleau ou d'un sabot ou patin.

8. Appareil selon l'une quelconque des revendications précédentes, dans lequel le dispositif fonctionnel supplémentaire comprend une source de chaleur (39, 51) qui est apte à appliquer la chaleur au toron en amont de l'élément de compactage.

9. Appareil selon la revendication 8 en dépendance de la revendication 5 ou 6, dans lequel la source de chaleur 51 est apte à appliquer la chaleur au toron en aval des dispositifs de bridage et de sectionnement (53, 54).

10. Dispositif pour étendre des cordes ou torons en matériau composite et comprenant une embase de machine (11), un support de tête (13) mobile sur un système de voies d'embase (12), une source de distribution de torons, et un appareil pour étendre les torons monté sur le suipport de tête (13) et qui est apte à appliquer des torons de matériau composite sur une surface de moule (17), l'appareil étant en conformité avec l'une quelconque des revendications précédentes.

FIG. 1

FIG.2

FIG.3

18

21

22

19

3

24

26

23

3

27

30

25

29

28

20

FIG.5

34

FIG. 6

FIG. 4

FIG. 7A

46
44
45
50
54
53
47
51
CUT CLAMP
49
48
52
19

FIG. 7B

46
44
45
54
53
48
47
19

FIG. 7C

44
54
53
CUT CLAMP
48
19

FIG. 7D

44
46
UNCLAMP
48
19
17

FIG. 8B

FIG. 8A

53

54

64 62 63

66

65

FREE
RUNNING
STRAND

58 55 59

56 57

60 61

19

19

FIG. 8C

54

62

66

53

ENGAGE
CLAMP
PAWL

19

FIG. 8D

54

CUT

62

53

CLAMP, CUT
& HOLD
UNTIL
RELEASE

19

FIG. 10

68

9

FIG. 9

54

68

67

67

9

9

19 19

19 19